(19) Europäisches Patentamt
European Patent Office
Office européen des brevets

(11) EP 4 375 726 A1

(12) # EUROPEAN PATENT APPLICATION

published in accordance with Art. 153(4) EPC

(43) Date of publication:
**29.05.2024 Bulletin 2024/22**

(21) Application number: **21959382.9**

(22) Date of filing: **30.09.2021**

(51) International Patent Classification (IPC):
***G02B 26/10*** *(2006.01)*

(52) Cooperative Patent Classification (CPC):
**G02B 26/10**

(86) International application number:
**PCT/JP2021/036138**

(87) International publication number:
**WO 2023/053342 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
- **Pioneer Corporation**
**Tokyo 113-0021 (JP)**
- **Pioneer Smart Sensing Innovations Corporation**
**Tokyo 113-0021 (JP)**

(72) Inventor: **KUROKI, Eiji**
**Kawagoe-shi, Saitama 350-8555 (JP)**

(74) Representative: **Vossius & Partner**
**Patentanwälte Rechtsanwälte mbB**
**Siebertstrasse 3**
**81675 München (DE)**

(54) **OPTICAL SCANNING DEVICE AND SENSOR DEVICE**

(57) A first resin body (310) is provided over at least a part of a first frame body (210). The first resin body (310) covers at least a part of a surface, on a positive direction side of a third direction (Z), of the first frame body (210), at least a part of a surface, on a negative direction side of the third direction (Z), of the first frame body (210), at least a part of an inner edge, facing in a direction perpendicular to the third direction (Z), of the first frame body (210), and at least a part of an outer edge, facing in the direction perpendicular to the third direction (Z), of the first frame body (210).

FIG. 5

A−A(10)
310b
230b
320
320a
210
210b
230
220(222)
210a
310a
100
230a
230g
212
250c
252
240(242)
230d
232
310c
210c
230f
240(244)
254
350
230e
110
310
220(224)
X
Y
Z

EP 4 375 726 A1

## Description

TECHNICAL FIELD

The present invention relates to an optical scanning device and a sensor device.

BACKGROUND ART

In recent years, there have been developments in various optical scanning devices. The optical scanning device includes a movable reflector that reflects light emitted from a light-emitting element such as a laser diode (LD). The movable reflector may be formed by processing a semiconductor substrate such as a Silicon On Insulator (SOI) substrate using a semiconductor manufacturing technique. In contrast, as described in, for example, Patent Document 1, the movable reflector may be formed by processing metal. In addition, as described in the Patent Document 1, a frame body and a torsion bar may be formed by processing metal. The frame body is provided in at least a part of a region surrounding the movable reflector. The torsion bar is connected to the movable reflector and the frame body.

RELATED ART DOCUMENT

PATENT DOCUMENT

Patent Document 1: Japanese Unexamined Patent Application Publication No. 2010-2777

SUMMARY OF THE INVENTION

PROBLEM TO BE SOLVED

For example, as described in Patent Document 1, a movable reflector, a frame body, and a torsion bar may be formed by processing metal. However, in this case, deformation such as plastic deformation and elastic deformation may be generated in the frame body depending on various conditions such as a rotation movement of the movable reflector, simple harmonic motion of the movable reflector, a load of the movable reflector, thermal stress of at least a part of the movable reflector, the frame body, and the torsion bar. In a case where the deformation is generated in the frame body, an unnecessary vibration may be generated in the frame body.

Examples of a problem to be solved by the present invention include suppressing an unnecessary vibration of a frame body.

SOLUTION TO PROBLEM

According to the invention described in Claim 1, provided is an optical scanning device including:

a movable reflector;
a first frame body made of metal that is located in at least a part of a region surrounding the movable reflector;
a first torsion bar made of metal that is connected to the movable reflector and the first frame body; and
a first resin body provided over at least a part of the first frame body.

According to the invention described in Claim 10, provided is a sensor device including:

the optical scanning device;
a light-emitting element; and
a light detection element that detects light emitted from the light-emitting element, reflected by the movable reflector, and reflected or scattered by an object that exists outside the optical scanning device.

BRIEF DESCRIPTION OF THE DRAWINGS

FIG.1 is a perspective view in which an optical scanning device according to an embodiment is viewed from a side on which a movable reflector is located.
FIG.2 is a perspective view in which the optical scanning device according to the embodiment is viewed from a side opposite to the side on which the movable reflector is located.

FIG.3 is a side view in which the optical scanning device according to the embodiment is viewed from a direction parallel to a rotation axis of the movable reflector.

FIG.4 is a side view in which the optical scanning device according to the embodiment is viewed from a direction parallel to a rotation axis of a first frame body.

FIG.5 is a cross-sectional view taken along line A-A of FIG.3.

FIG.6 is a diagram to explain an example of a method for manufacturing the optical scanning device according to the embodiment.

FIG.7 is a diagram to explain an example of a method for manufacturing the optical scanning device according to the embodiment.

FIG.8 is a perspective view of an optical scanning device according to a modification example.

FIG.9 is a diagram indicating a configuration of a sensor device according to an example.

DESCRIPTION OF EMBODIMENTS

An embodiment, a modification example, and an example of the present invention will be described below with referring to the drawings. Note that in all the drawings, the same constituent elements are given the same reference numerals, and descriptions thereof will not be repeated.

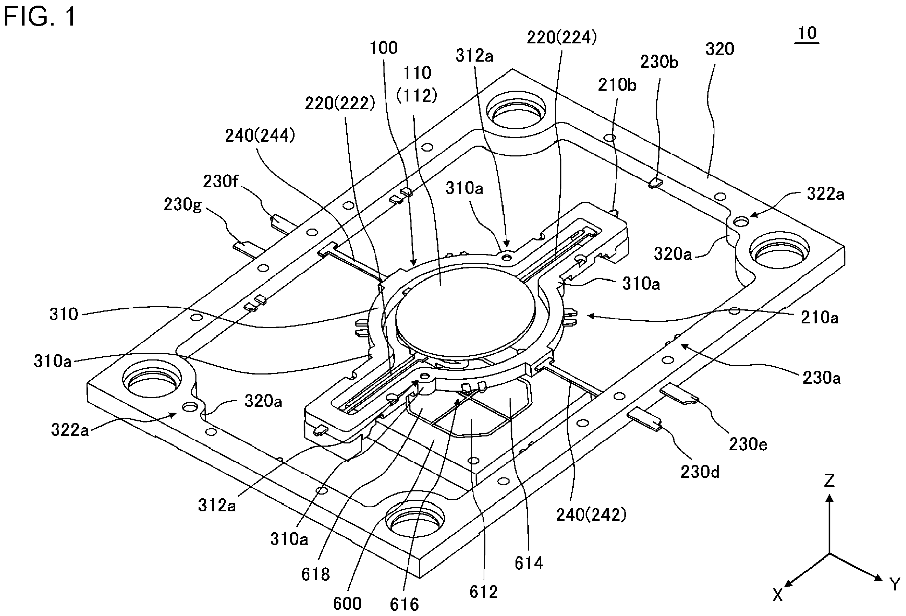

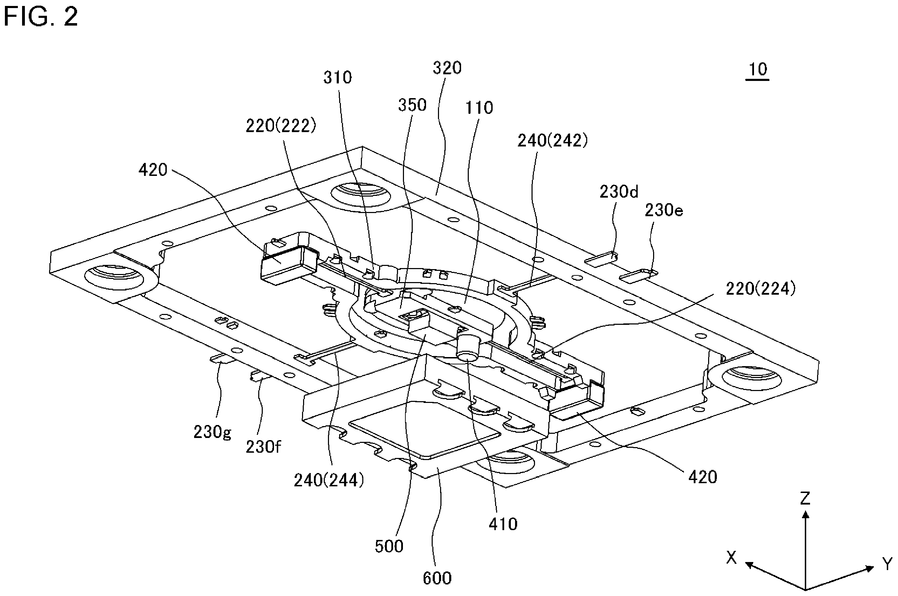

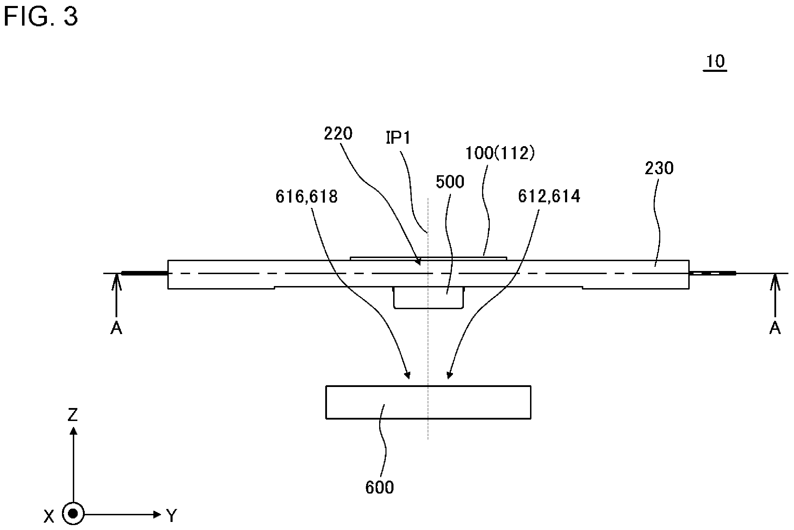

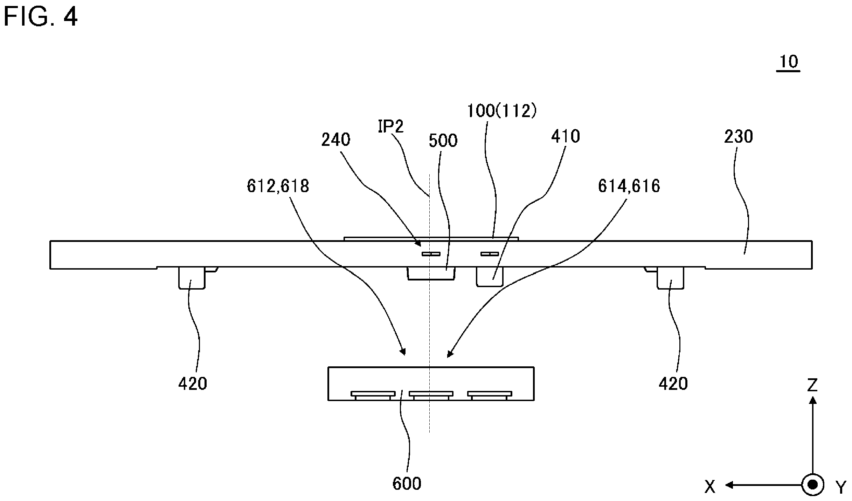

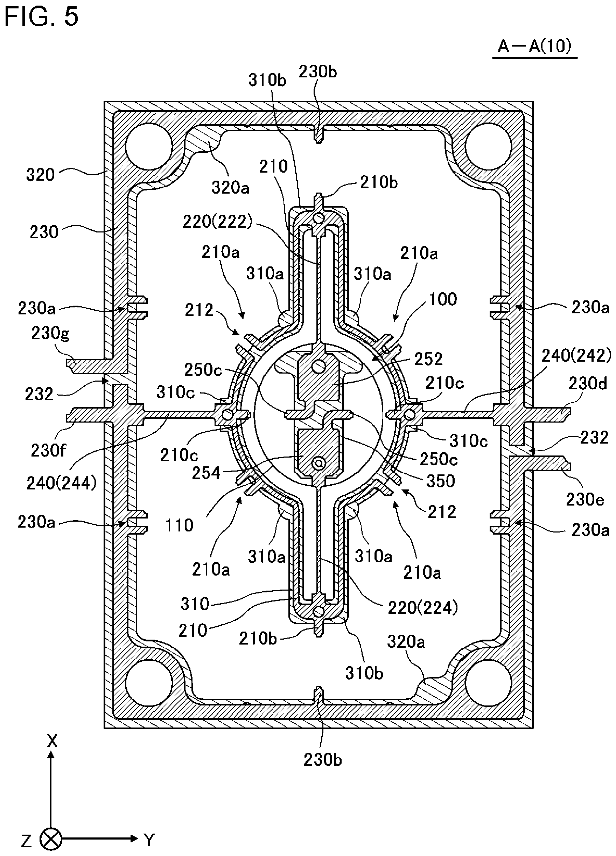

FIG.1 is a perspective view in which an optical scanning device 10 according to an embodiment is viewed from a side on which a movable reflector 100 is located. FIG.2 is a perspective view in which the optical scanning device 10 according to the embodiment is viewed from a side opposite to a side on which the movable reflector 100 is located. FIG.3 is a side view in which the optical scanning device 10 according to the embodiment is viewed from a direction parallel to a rotation axis of the movable reflector 100. FIG.4 is a side view in which the optical scanning device 10 according to the embodiment is viewed from a direction parallel to a rotation axis of a first frame body 210. FIG.5 is a cross-sectional view taken along line A-A of FIG.3.

In FIGs.1 to 5, an arrow indicating a first direction X, a second direction Y, or a third direction Z indicates that a direction from a base end to a tip of the arrow is a positive direction of the direction indicated by the arrow and that a direction from the tip to the base end of the arrow is a negative direction of the direction indicated by the arrow. In FIG. 3 and FIG.4, a white circle with a black dot indicating the first direction X or the second direction Y indicates that a direction from a far side to a near side of the page is the positive direction of the direction indicated by the white circle, and that a direction from the near side to the far side of the page is the negative direction of the direction indicated by the white circle. In FIG.5, a white circle with an X mark, indicating the third direction Z, indicates that the direction from the near side to the far side of the page is the positive direction of the direction indicated by the white circle, and that the direction from the far side to the near side of the page is the negative direction of the direction indicated by the white circle.

The first direction X indicates a direction parallel to the rotation axis of the movable reflector 100 when the movable reflector 100 rotates with first torsion bars 220 as the rotation axis with respect to the first frame body 210. The positive direction of the first direction X is a direction parallel to a direction from a second bar 224 to a first bar 222, which is described later. The negative direction of the first direction X is parallel to a direction from the first bar 222 to the second bar 224. The second direction Y is orthogonal to the first direction X. The second direction Y indicates a direction parallel to a rotation axis of the first frame body 210 when the first frame body 210 rotates with second torsion bars 240 as the rotation axis with respect to a second frame body 230. The positive direction of the second direction Y is parallel to a direction from a fourth bar 244 to a third bar 242, which is later-described. The negative direction of the second direction Y is parallel to a direction from the third bar 242 to the fourth bar 244. The third direction Z is orthogonal to both of the first direction X and the second direction Y. The positive direction of the third direction Z is a direction from a side on which a reflecting surface 112 of the movable reflector 100 is located to a side opposite to the side on which the reflecting surface 112 of the movable reflector 100 is located. The negative direction of the third direction Z is a direction from the side on which the reflecting surface 112 of the movable reflector 100 is located to the side on which the reflecting surface 112 of the movable reflector 100 is located.

The optical scanning device 10 includes the movable reflector 100, the first frame body 210, a pair of the first torsion bars 220, the second frame body 230, a pair of the second torsion bars 240, a first resin body 310, a second resin body 320, a first magnet 410, two second magnets 420, a first light-emitting element 500, and a first light detection element 600. The pair of first torsion bars 220 include the first bar 222 and the second bar 224. The pair of second torsion bars 240 include the third bar 242 and the fourth bar 244.

As shown in FIG.5, the movable reflector 100 includes a reflector 110, a first supporting unit 252, a second supporting unit 254, and a resin stage 350.

In the present embodiment, the reflector 110 has a circular-plate shape having a thickness in the third direction Z. The reflector 110 includes the reflecting surface 112. The reflecting surface 112 is a flat surface that is oriented toward the positive direction of the third direction Z. A shape of the movable reflector 100 is not limited to the shape according to the present embodiment.

The first supporting unit 252 is made of metal. The first supporting unit 252 is connected to an end portion, in the negative direction of the first direction X, of the first bar 222. With respect to the center of the movable reflector 100 in the first direction X, the first supporting unit 252 is located on a positive direction side of the first direction X.

The second supporting unit 254 is made of metal. The second supporting unit 254 is connected to an end portion, in the positive direction of the first direction X, of the second bar 224. With respect to the center of the movable reflector 100 in the first direction X, the second supporting unit 254 is located on a negative direction side of the first direction X. In the present embodiment, the first supporting unit 252 and the second supporting unit 254 are symmetrically arranged with respect to a central axis that passes through the center of the movable reflector 100 in the third direction Z.

The resin stage 350 is provided over at least a part of the first supporting unit 252 and at least a part of the second supporting unit 254. Specifically, a portion of the resin stage 350 located on the negative direction side of the third direction Z of the first supporting unit 252 and the second supporting unit 254 covers at least a part of surfaces, on the negative direction side of the third direction Z, of the first supporting unit 252 and the second supporting unit 254. Further, a portion of the resin stage 350 located on the positive direction side of the third direction Z of the first supporting unit 252 and the second supporting unit 254 covers at least a part of surfaces, on the positive direction side of the third direction Z, of the first supporting unit 252 and the second supporting unit 254. In addition, a portion of the resin stage 350 that surrounds the first supporting unit 252 and the second supporting unit 254 in a direction perpendicular to the third direction Z covers at least a part of outer edges, facing in the direction perpendicular to the third direction Z, of the first supporting unit 252 and the second supporting unit 254.

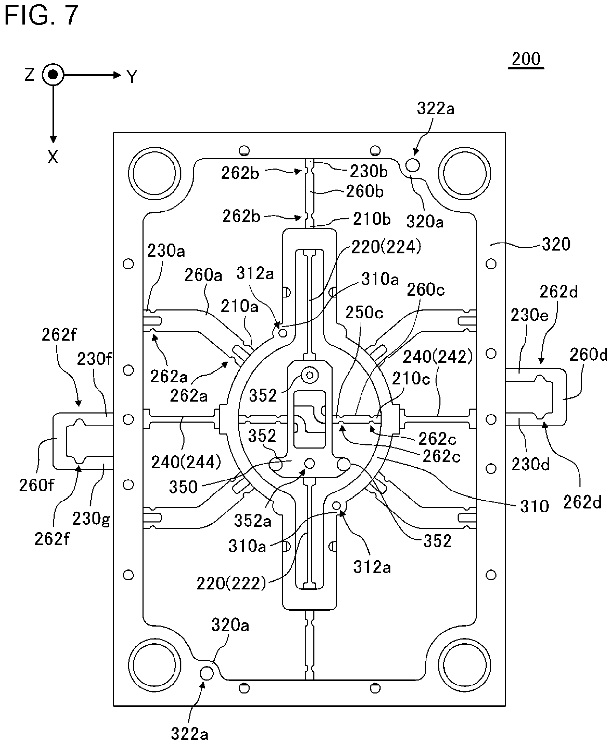

As shown in later-described FIG.7, three supporting protrusions 352 are provided on a surface, on a positive direction side of the third direction Z, of the resin stage 350. The reflector 110 is mounted on the three supporting protrusions 352.

According to the present embodiment, in comparison with a case where the resin stage 350 is not provided for the first supporting unit 252 and the second supporting unit 254, accuracy of installation of the reflector 110 can be improved. Specifically, in a case where the resin stage 350 is not provided, a warp may be generated in the first supporting unit 252 and the second supporting unit 254. In contrast, in a case where the resin stage 350 is provided, it is possible to suppress the warp in the first supporting unit 252 and the second supporting unit 254. In addition, a burr may exist in the first supporting unit 252 and the second supporting unit 254. In contrast, in a case where the resin stage 350 is provided, it is possible to cover the burr made in the first supporting unit 252 and the second supporting unit 254 with the resin stage 350.

Further, in the present embodiment, the resin stage 350 can function as a guiding member to determine mounting positions of the first magnet 410 and the first light detection element 600. Therefore, in comparison with a case where the resin stage 350 is not provided for the first supporting unit 252 and the second supporting unit 254, it is possible to install the first magnet 410 and the first light detection element 600 more easily and more accurately.

Further, according to the present embodiment, while the first supporting unit 252 and the second supporting unit 254 are kept in an electronically insulated state, the first supporting unit 252 and the second supporting unit 254 can be physically combined with the resin stage 350. Assuming that the first supporting unit 252 and the second supporting unit 254 communicate with each other, and the first supporting unit 252 and the second supporting unit 254 are electronically connected, even when an anode and a cathode of the first light detection element 600 are electronically connected to the first supporting unit 252 and the second supporting unit 254, current cannot flow through the first light detection element 600, as described later. In contrast, in the present embodiment, current can flow through the first light detection element 600 by electronically connecting the anode and the cathode of the first light detection element 600 to the first supporting unit 252 and the second supporting unit 254.

The first frame body 210 is made of metal. The first frame body 210 is located in at least a part of a region surrounding the movable reflector 100 in the direction perpendicular to the third direction Z.

The first bar 222 is made of metal. As shown in FIG.5, the first bar 222 extends in the first direction X between an outer edge of an end portion, in the positive direction of the first direction X, of the first supporting unit 252 and an inner edge of an end portion, in the positive direction of the first direction X, of the first frame body 210. One end, in the negative direction of the first direction X, of the first bar 222 is connected to the outer edge of the end portion, in the positive direction of the first direction X, of the first supporting unit 252. The other end, in the positive direction of the first direction X, of the first bar 222 is connected to the inner edge of the end portion, in the positive direction of the first direction X, of the first frame body 210.

The second bar 224 is made of metal. As shown in FIG.5, the second bar 224 extends in the first direction X between an outer edge of an end portion, in the negative direction of the first direction X, of the second supporting unit 254 and an inner edge of an end portion, in the negative direction of the first direction X, of the first frame body 210. One end, in the positive direction of the first direction X, of the second bar 224 is connected to the outer edge of the end portion, in the negative direction of the first direction X, of the second supporting unit 254. The other end, in the negative direction of the first direction X, of the second bar 224 is connected to the inner edge of the end portion, in the negative direction of the first direction X, of the first frame body 210.

As shown in FIG.2, the first magnet 410 is installed on a negative direction side of the third direction Z of the movable reflector 100. The first magnet 410 is located on the negative direction side of the first direction X with respect to the center of the first direction X and the second direction Y of the movable reflector 100. Since the first magnet 410 receives a magnetic flux emitted from a not-shown magnetic circuit, the movable reflector 100 oscillates with respect to the first frame body 210 with the first torsion bars 220 as the rotation axis. In the present embodiment, the first torsion bars 220 are a high-speed driving shaft.

The second frame body 230 is made of metal. The second frame body 230 is located in at least a part of a region surrounding the first frame body 210 in the direction perpendicular to the third direction Z.

In the present embodiment, a shape of the second frame body 230 is a substantial rectangle having a pair of long sides extending in the first direction X and a pair of short sides extending in the second direction Y. The shape of the second frame body 230 is not limited to the shape according to the present embodiment.

The third bar 242 is made of metal. As shown in FIG.5, the third bar 242 extends in the second direction Y between an outer edge of the center, in the first direction X, of a portion, in the positive direction of the second direction Y, of the first frame body 210 and an inner edge of the center, in the first direction X, of a portion, in the positive direction of the second direction Y, of the second frame body 230. One end, in the negative direction of the second direction Y, of the third bar 242 is connected to the outer edge of the center, in the first direction X, of the portion, in the positive direction of the second direction Y, of the first frame body 210. The other end, in the positive direction of the second direction Y, of the third bar 242 is connected to the inner edge of the center, in the first direction X, of the portion, in the positive direction of the second direction Y, of the second frame body 230.

The fourth bar 244 is made of metal. As shown in FIG.5, the fourth bar 244 extends in the second direction Y between an outer edge of the center, in the first direction X, of a portion, in the negative direction of the second direction Y, of the first frame body 210 and an inner edge of the center, in the first direction X, of a portion, in the negative direction of the second direction Y, of the second frame body 230. One end, in the positive direction of the second direction Y, of the third bar 242 is connected to the outer edge of the center, in the first direction X, of the portion, in the negative direction of the second direction Y, of the first frame body 210. The other end, in the negative direction of the second direction Y, of the third bar 242 is connected to the inner edge of the center, in the first direction X, of the portion, in the negative direction of the second direction Y, of the second frame body 230.

The two second magnets 420 are installed on a negative direction side of the third direction Z of the first frame body 210. One of the two second magnets 420 is located at the end portion, in the positive direction of the first direction X, of the first frame body 210. The other of the two second magnets 420 is located at the end portion, in the negative direction of the first direction X, of the first frame body 210. Since the two second magnets 420 receive magnetic flux emitted from the not-shown magnetic circuit, the first frame body 210 oscillates with the second torsion bars 240 as the rotation axis with respect to the second frame body 230. In the present embodiment, the second torsion bars 240 are a low-speed driving shaft.

In the present embodiment, a second direction Y width of the second magnet 420 located at the end portion, in the positive direction of the first direction X, of the first frame body 210 is substantially equal to a second direction Y width of the end portion, in the positive direction of the first direction X, of the first frame body 210. For example, the second direction Y width of the second magnet 420 located at the end portion, in the positive direction of the first direction X, of the first frame body 210 is equal to or greater than 95% and equal to or less than 1050 of the second direction Y width of the end portion, in the positive direction of the first direction X, of the first frame body 210. A not-shown magnetic circuit such as a driving coil or the like is arranged on both sides, in the second direction Y, of the end portion, in the positive direction of the first direction X, of the first frame body 210. Therefore, according to the present embodiment, in comparison with a case where the second direction Y width of the second magnet 420 is shorter than the second direction Y width of the end portion, in the positive direction of the first direction X, of the first frame body 210, it is possible to make the magnetic circuit and the second magnet 420 to be closer to each other. In addition, according to the present embodiment, in comparison with a case where the second direction Y width of the second magnet 420 is longer than the second direction Y width of the end portion, in the positive direction of the first direction X, of the first frame body 210, a weight of the second magnet 420 can be made lighter. The second direction Y width of the second magnet 420 is not limited to the example described above. For example, the second direction Y width of the second magnet 420 may be longer than the second direction Y width of the end portion, in the positive direction of the first direction X, of the first frame body 210. In this case, in comparison with a case where the second direction Y width of the second magnet 420 is equal to or less than the second direction Y width of the end portion, in the positive direction of the first direction X, of the first frame body 210, the magnetic circuit and the second magnet 420 can be made close to each other more easily.

A second direction Y width of the second magnet 420 located at the end portion, in the negative direction of the first direction X, of the first frame body 210 is substantially equal to a second direction Y width of the end portion, in the negative direction of the first direction X, of the first frame body 210 in the same manner as the second direction Y width of the second magnet 420 located at the end portion, in the positive direction of the first direction X, of the first frame body 210.

Locations at which the two second magnets 420 are provided are not limited to the locations according to the present embodiment. For example, out of the two second magnets 420, the second magnet 420 located on the positive direction side of the first direction X may be located on the negative direction side of the first direction X with respect to the end portion, in the positive direction side of the first direction X, of the first frame body 210. In this case, the second direction Y width of the second magnet 420 may be substantially equal to a second direction Y width of a portion of the first frame body 210 at which the second magnet 420 is provided.

The first resin body 310 is provided over at least a part of the first frame body 210. The first resin body 310 covers at least a part of a surface, on the positive direction side of the third direction Z, of the first frame body 210, at least a part of a surface, on the negative direction side of the third direction Z, of the first frame body 210, at least a part of an inner edge, facing in a direction perpendicular to the third direction Z, of the first frame body 210, and at least a part of an outer edge, facing in the direction perpendicular to the third direction Z, of the first frame body 210. In the present embodiment, in comparison with a case where the first resin body 310 is not provided over the first frame body 210, it is possible to suppress the warp made in the first frame body 210.

In the present embodiment, in comparison with the case where the first resin body 310 is not provided over the first frame body 210, it is possible to suppress an unnecessary vibration of the first frame body 210. Specifically, the material of the first frame body 210 and the material of the first resin body 310 are different. Therefore, a resonance frequency of the first frame body 210 and a resonance frequency of the first resin body 310 are different. Thus, in comparison with the case where the first resin body 310 is not provided, it is possible to dump a resonance mode of the first frame body 210, that is, the unnecessary vibration.

Further, in the present embodiment, the first resin body 310 can function as the guiding member to determine the mounting positions of the two second magnets 420. Therefore, in comparison with the case where the first resin body 310 is not provided over the first frame body 210, it is possible to install the two second magnets 420 more easily and more accurately.

The second resin body 320 is provided over at least a part of the second frame body 230. The second resin body 320 covers at least a part of a surface, on the positive direction side of the third direction Z, of the second frame body 230, at least a part of a surface, on the negative direction side of the third direction Z, of the second frame body 230, at least a part of an inner edge, facing in a direction perpendicular to the third direction Z, of the second frame body 230, and at least a part of an outer edge, facing in the direction perpendicular to the third direction Z, of the second frame body 230. In the present embodiment, in comparison with a case where the second resin body 320 is not provided over the second frame body 230, it is possible to suppress the warp made in the second frame body 230. Therefore, in the present embodiment, in comparison with the case where the second resin body 320 is not provided over the second frame body 230, it is possible to suppress an unnecessary vibration of the second frame body 230.

Next, with reference to FIG.5, details of a shape of the first frame body 210 will be explained.

In the present embodiment, a second direction Y distance between both portions, opposing to each other in a direction parallel to the rotation axis of the first frame body 210, of the first frame body 210 decreases in at least a part of the first frame body 210 as going away from the rotation axis toward the positive direction of the first direction X and the negative direction side of the first direction X.

Specifically, a second direction Y distance between portions of the first frame body 210, located on both sides, in the second direction Y, of the reflector 110 decreases as advancing from the center of the first direction X of the reflector 110 toward an end portion, in the positive direction of the first direction X, of the movable reflector 100 and an end portion, in the negative direction of the first direction X, of the movable reflector 100, along a second direction Y width of the movable reflector 100. A second direction Y distance between portions of the first frame body 210 located on both sides, in the second direction Y, of the first bar 222 is constant from the end, in the negative direction of the first direction X, of the first bar 222 to the other end, in the positive direction of the first direction X, of the first bar 222. A second direction Y distance between portions of the first frame body 210 located on both sides, in the second direction Y, of the second bar 224 is constant from the one end, in the positive direction of the first direction X, of the second bar 224 to the other end, in the negative direction of the first direction X, of the second bar 224.

The present embodiment is compared with a case where the second direction Y distance between the both portions of the first frame body 210 opposing to each other in the direction parallel to the rotation axis of the first frame body 210 is constant from the rotation axis to the end portion, in the positive direction or the negative direction of the first direction X, of the first frame body 210. In the present embodiment, in comparison with the case described above, making a first direction X length of the first torsion bar 220 longer is allowed. A specific example is as follows. That is, making the first direction X length of the first torsion bar 220 relatively long may be necessary. On the other hand, the longer the first direction X length of the first torsion bar 220 becomes, the longer the first direction X length of the first frame body 210 also becomes. The longer the first direction X length of the first torsion bar 220 becomes, a moment of inertia of the first frame body 210 that rotates with the second torsion bars 240 as the rotation axis becomes larger.

Further, the larger the mass of the end portion, in the positive direction of the first direction X, of the first frame body 210 and the mass of the end portion, in the negative direction of the first direction X, of the first frame body 210 become, the larger the moment of inertia becomes. In the present embodiment, in comparison with the case described above, the mass of the end portion, in the positive direction of the first direction X, of the first frame body 210 and the mass of the end portion, in the negative direction of the first direction X, of the first frame body 210 can be made small. Therefore, in the present embodiment, in comparison with the case described above, it is possible to make the first direction X length of the first torsion bar 220 to suppress the above-mentioned moment of inertia to a level equal to or less than a certain value longer.

The shape of the first frame body 210 is not limited to the shape according to the present embodiment. For example, the second direction Y distance between the both portions of the first frame body 210 opposing to each other in the direction parallel to the rotation axis of the first frame body 210 may be constant from the rotation axis of the first frame body 210 to the end portion, in the positive direction or the negative direction of the first direction X, of the first frame body 210.

Then, with reference to FIG.5, four pairs of first protrusions 210a, four pairs of second protrusions 230a, two third protrusions 210b, two fourth protrusions 230b, two fifth protrusions 250c, and two sixth protrusions 210c will be explained.

In the present embodiment, each pair of first protrusions 210a includes two protrusions. Two pairs of the first protrusions 210a are provided at an outer edge of a portion of the first frame body 210 surrounding a portion, in the positive direction of the second direction Y, of the movable reflector 100 in the direction perpendicular to the third direction Z. These two pairs of first protrusions 210a are located on both sides of the first direction X with respect to the center, in the first direction X, of the portion of the first frame body 210. A tip of each of the first protrusions 210a is exposed from an outer edge of a portion of the first resin body 310 surrounding the portion, in the positive direction of the second direction Y, of the movable reflector 100 in the direction perpendicular to the third direction Z. The other two pairs of the first protrusions 210a are provided at an outer edge of a portion of the first frame body 210 surrounding a portion, in the negative direction of the second direction Y, of the movable reflector 100 in the direction perpendicular to the third direction Z. These two pairs of first protrusions 210a are located on the both sides of the first direction X with respect to the center, in the first direction X, of the portion of the first frame body 210. A tip of each of the first protrusions 210a is exposed from an outer edge of a portion of the first resin body 310 surrounding the portion, in the negative direction of the second direction Y, of the movable reflector 100 in the direction perpendicular to the third direction Z.

In the present embodiment, each pair of second protrusions 230a includes two protrusions. Two pairs of the second protrusions 230a are provided at an inner edge of a portion of the second frame body 230 located on the positive direction side of the second direction Y with respect to the first frame body 210. These two pairs of second protrusions 230a are located on both sides of the first direction X with respect to the center, in the first direction X, of the portion of the second frame body 230. A tip of each of the second protrusions 230a is exposed from an inner edge of a portion of the second resin body 320 located on the positive direction side of the second direction Y with respect to the first frame body 210. Two pairs of the second protrusions 230a are provided at an inner edge of a portion of the second frame body 230 located on the negative direction side of the second direction Y with respect to the first frame body 210. These two pairs of second protrusions 230a are located on both sides of the first direction X with respect to the center, in the first direction X, of the portion of the second frame body 230. A tip of each of the second protrusions 230a is exposed from an inner edge of a portion of the second resin body 320 located on the negative direction side of the second direction Y with respect to the first frame body 210.

A third protrusion 210b is provided at an outer edge of the end portion, in the positive direction of the first direction X, of the first frame body 210. This third protrusion 210b is exposed from an outer edge of an end portion, in the positive direction of the first direction X, of the first resin body 310. The other third protrusion 210b is provided at an outer edge of an end portion, in the negative direction of the first direction X, of the first frame body 210. This third protrusion 210b is exposed from an outer edge of an end portion, in the negative direction of the first direction X, of the first resin body 310.

A fourth protrusion 230b is provided at an inner edge of the center, in the second direction Y, of a portion of the second frame body 230 located on the positive direction side of the first direction X with respect to the first frame body 210. This fourth protrusion 230b is exposed from an inner edge of the center, in the second direction Y, of a portion of the second resin body 320 located on the positive direction side of the first direction X with respect to the first frame body 210. The other fourth protrusion 230b is provided at an inner edge of the center, in the second direction Y, of a portion of the second frame body 230 located on the negative direction side of the first direction X with respect to the first frame body 210. This fourth protrusion 230b is exposed from an inner edge of the center, in the second direction Y, of a portion of the second resin body 320 located on the negative direction side of the first direction X with respect to the first frame body 210.

A fifth protrusion 250c is provided at an end portion, on the negative direction side of the first direction X, of the first supporting unit 252. A tip of this fifth protrusion 250c is exposed from an outer edge, on the negative direction side of the second direction Y, of the resin stage 350. The other fifth protrusion 250c is provided on the positive direction side of the first direction X of the second supporting unit 254. A tip of this fifth protrusion 250c is exposed from an outer edge, on the positive direction side of the second direction Y, of the resin stage 350.

A sixth protrusion 210c is provided at an inner edge of the center, in the first direction X, of the portion of the first frame body 210 surrounding the portion, in the positive direction of the second direction Y, of the movable reflector 100 in the direction perpendicular to the third direction Z. This sixth protrusion 210c is exposed from the inner edge of the center, in the first direction X, of the portion of the first resin body 310 surrounding the portion, in the positive direction of the second direction Y, of the movable reflector 100 in the direction perpendicular to the third direction Z. The other sixth protrusion 210c is provided at an inner edge of the center, in the first direction X, of the portion of the first frame body 210 surrounding the portion, in the negative direction of the second direction Y, of the movable reflector 100 in the direction perpendicular to the third direction Z. This sixth protrusion 210c is exposed from an inner edge of the center, in the first direction X, of the portion of the first resin body 310 surrounding the portion, in the negative direction of the second direction Y, of the movable reflector 100 in the direction perpendicular to the third direction Z.

Some protrusions of these protrusions need not be provided. For example, the two third protrusions 210b and the two fourth protrusions 230b need not be provided. Further, the two fifth protrusions 250c and the two sixth protrusions 210c need not be provided.

Next, with reference to FIG.5, a first terminal 230d, a seventh protrusion 230e, a second terminal 230f, and an eighth protrusion 230g will be explained.

The first terminal 230d is provided at an outer edge of the center, in the first direction X, of the portion of the second frame body 230 located on the positive direction side of the second direction Y with respect to the first frame body 210. A tip of the first terminal 230d is exposed from an outer edge of the center, in the first direction X, of the portion of the second resin body 320 located on the positive direction side of the second direction Y with respect to the first frame body 210.

The seventh protrusion 230e is provided at an outer edge of a portion of the second frame body 230 located on the positive direction side of the second direction Y with respect to the first frame body 210 and located, with respect to the center in the first direction X, on the negative direction side of the first direction X. A tip of the seventh protrusion 230e is exposed from an outer edge of a portion of the second resin body 320 located on the positive direction side of the second direction Y with respect to the first frame body 210 and located, with respect to the center in the first direction X, on the negative direction side of the first direction X.

The second terminal 230f is provided at an outer edge of the center, in the first direction X, of the portion of the second frame body 230 located on the negative direction side of the second direction Y with respect to the first frame body 210. A tip of the second terminal 230f is exposed from an outer edge of the center, in the first direction X, of the portion of the second resin body 320 located on the negative direction side of the second direction Y with respect to the first frame body 210.

The eighth protrusion 230g is provided at an outer edge of the portion of the second frame body 230 located on the negative direction side of the second direction Y with respect to the first frame body 210 and located, with respect to the center in the first direction X, on the positive direction side of the first direction X. A tip of the eighth protrusion 230g is exposed from an outer edge of a portion of the second resin body 320 located on the negative direction side of the second direction Y with respect to the first frame body 210 and located, with respect to the center in the first direction X, on the positive direction side of the first direction X.

Then, two first dividing portions 212 and two second dividing portions 232 will be explained.

A first dividing portion 212 is provided on the positive direction side of the second direction Y of the first frame body 210 with respect to the rotation axis of the movable reflector 100. In the present embodiment, this first dividing portion 212 is provided in a portion of the first frame body 210 surrounding a portion, in the negative direction of the first direction X and the positive direction of the second direction Y, of the movable reflector 100 in the direction perpendicular to the third direction Z. The other first dividing portion 212 is provided on the negative direction side of the second direction Y of the first frame body 210 with respect to the rotation axis of the movable reflector 100. In the present embodiment, this first dividing portion 212 is provided in a portion of the first frame body 210 surrounding a portion, in the positive direction of the first direction X and the negative direction of the second direction Y, of the movable reflector 100, in the direction perpendicular to the third direction Z.

Since these two first dividing portions 212 are provided, the first bar 222 and the second bar 224 are not electronically connected to each other through the first frame body 210.

A second dividing portion 232 is provided on the positive direction side of the first direction X of the second frame body 230 with respect to the rotation axis of the first frame body 210. In the present embodiment, this second dividing portion 232 is provided between the second terminal 230f and the eighth protrusion 230g. The other second dividing portion 232 is provided on the negative direction side of the first direction X of the second frame body 230 with respect to the rotation axis of the first frame body 210. In the present embodiment, this second dividing portion 232 is provided between the first terminal 230d and the seventh protrusion 230e.

Since these two second dividing portions 232 are provided, the third bar 242 and the fourth bar 244 are not electronically connected to each other through the second frame body 230.

Then, with reference to FIG.5, four first wide-width portions 310a, two second wide-width portions 310b, and two third wide-width portions 310c will be explained.

A first wide-width portion 310a is provided in a portion of the first resin body 310 in which a curvature of the first frame body 210 changes. In the present embodiment, the first wide-width portion 310a is provided on the outside of an outer edge of the first frame body 210. Thereby, an amount of resin in the portion of the first resin body 310 in which the curvature of the first frame body 210 changes is larger than an amount of resin in the surroundings of the portion of the first resin body 310 in which the curvature of the first frame body 210 changes. A large stress is easily added to the first resin body 310 around a portion of the first frame body 210 at which the curvature thereof changes in comparison with the surroundings of the portion of the first frame body 210. Therefore, according to the present embodiment, in comparison with a case where the first wide-width portion 310a is not provided in the portion of the first resin body 310 in which the curvature of the first frame body 210 changes, it is possible to improve strength of the first resin body 310.

In the present embodiment, one of the four first wide-width portions 310a is located between a portion of the first frame body 210 that is curved along the outer edge, on the positive direction side of the first direction X and the positive direction side the second direction Y, of the movable reflector 100 and a portion of the first frame body 210 that linearly extends on the positive direction side of the second direction Y with respect to the first bar 222 in parallel to the first direction X. Another one of the four first wide-width portions 310a is located between a portion of the first frame body 210 that is curved along the outer edge, on the negative direction side of the first direction X and the positive direction side of the second direction Y, of the movable reflector 100 and a portion of the first frame body 210 that linearly extends on the positive direction side of the second direction Y with respect to the second bar 224 in parallel to the first direction X. Another one of the four first wide-width portions 310a is located between a portion of the first frame body 210 that is curved along the outer edge, on the negative direction side of the first direction X and the negative direction side of the second direction Y, of the movable reflector 100 and a portion of the first frame body 210 that linearly extends on the negative direction side of the second direction Y with respect to the second bar 224 in parallel to the first direction X. The other one of the four first wide-width portions 310a is located between a portion of the first frame body 210 that is curved along the outer edge, on the positive direction side of the first direction X and the negative direction side of the second direction Y, of the movable reflector 100 and a portion of the first frame body 210 that linearly extends on the negative direction side of the second direction Y with respect to the first bar 222 in parallel to the first direction X.

A configuration that causes the amount of the resin in the portion of the first resin body 310 in which the curvature of the first frame body 210 changes to be larger than the amount of the resin in the surroundings of the portion of the first resin body 310 in which the curvature of the first frame body 210 changes is not limited to the present embodiment. For example, a thickness in the third direction Z of the first resin body 310 in which the curvature of the first frame body 210 changes may be thicker than a thickness in the third direction Z of the first resin body 310 in the surroundings of the portion in which the curvature of the first frame body 210 changes.

As shown in FIG.1, a first hole 312a is provided on an upper surface, in the third direction Z, of the first wide-width portion 310a located on the positive direction side of the first direction X and the negative direction side of the second direction Y with respect to the center of the first direction X and the second direction Y of the first resin body 310. The other first hole 312a is provided on the upper surface, in the third direction Z, of the first wide-width portion 310a located on the negative direction side of the first direction X and the negative direction side of the second direction Y with respect to the center of the first direction X and the second direction Y of the first resin body 310. The two first wide-width portions 310a in which the first hole 312a is provided are provided to serve as gates from which a resin for forming the first resin body 310 is injected to a mold for molding the first resin body 310. Each of the first holes 312a remains as an inlet to inject the resin.

In the present embodiment, none of the first holes 312a are overlapped with the first frame body 210 when viewed in the third direction Z. In the entirety of the first resin body 310, a relatively large pressure is added to the gate from which the resin is injected. Therefore, in a case where the first hole 312a overlaps the first frame body 210 when viewed in the third direction Z, there is a risk of the first frame body 210 being deformed due to the pressure of the resin. In contrast, according to the present embodiment, in comparison with a case where the first hole 312a overlaps the first frame body 210 when viewed in the third direction Z, it is possible to suppress deformation of the first frame body 210 due to the pressure of the resin. A location at which the first hole 312a is provided is not limited to the location according to the present embodiment. For example, the first hole 312a may be overlapped with the first frame body 210 when viewed in the third direction Z.

In the present embodiment, the two first holes 312a are symmetrically arranged with respect to the center of the first direction X and the second direction Y of the first resin body 310.

Hereinafter, as necessary, the first hole 312a of the two first holes 312a located on the positive direction side of the second direction Y is referred to as one first hole 312a. As necessary, the first hole 312a of the two first holes 312a located on the negative direction side of the second direction Y is referred to as the other first hole 312a. As necessary, a portion of the first frame body 210 located on the positive direction side of the second direction Y with respect to the center of the second direction Y of the first frame body 210 is referred to as one side-portion of the first frame body 210. As necessary, a portion of the first frame body 210 located on the negative direction side of the second direction Y with respect to the center of the second direction Y of the first frame body 210 is referred to as the other side-portion of the first frame body 210. As necessary, a portion of the first frame body 210 connected to an end portion, in the positive direction of the first direction X, of the first bar 222 is referred to as a connecting portion between the first frame body 210 and the first bar 222. As necessary, a portion of the first frame body 210 connected to an end portion, in the negative direction of the first direction X, of the second bar 224 is referred to as a connecting portion between the first frame body 210 and the second bar 224.

The one first hole 312a is located to be shifted from a point on the one side-portion of the first frame body 210 which is equidistant in a circumferential direction of the first frame body 210 from the connecting portion between the first frame body 210 and the first bar 222 and the connecting portion between the first frame body 210 and the second bar 224. In the present embodiment, the point on the one side-portion of the first frame body 210 which is equidistant in the circumferential direction of the first frame body 210 from the connecting portion between the first frame body 210 and the first bar 222 and the connecting portion between the first frame body 210 and the second bar 224 is the center, in the first direction X, of the one side-portion of the first frame body 210.

The other first hole 312a is located to be shifted from a point on the other side-portion of the first frame body 210 which is equidistant in the circumferential direction of the first frame body 210 from the connecting portion between the first frame body 210 and the first bar 222 and the connecting portion between the first frame body 210 and the second bar 224. In the present embodiment, the point on the other side-portion of the first frame body 210 which is equidistant in the circumferential direction of the first frame body 210 from the connecting portion between the first frame body 210 and the first bar 222 and the connecting portion between the first frame body 210 and the second bar 224 is the center, in the first direction X, of the other side-portion of the first frame body 210.

In the present embodiment, in a case where the resin for forming the first resin body 310 is injected from the two first holes 312a, it is possible to cause a weld of the resin to be formed in a portion that is different from the connecting portion between the first frame body 210 and the first bar 222 and a portion that is different from the first frame body 210 and the second bar 224. Therefore, in comparison with a case where the weld is formed over the connecting portion between the first frame body 210 and the first bar 222 and the connecting portion between the first frame body 210 and the second bar 224, it is possible to suppress a damage to the first resin body 310.

As shown in FIG.1, the first hole 312a is not provided on an upper surface, in the third direction Z, of the first wide-width portion 310a located on the negative direction side of the first direction X and the positive direction side of the second direction Y with respect to the center of the first direction X and the second direction Y of the first resin body 310. The first hole 312a is not provided on an upper surface, in the third direction Z, of the first wide-width portion 310a located on the positive direction side of the first direction X and the negative direction side of the second direction Y with respect to the center of the first direction X and the second direction Y of the first resin body 310. The two first wide-width portions 310a in which the first hole 312a is not provided are symmetrically arranged with respect to the center of the second direction Y of the first resin body 310 with respect to the two first wide-width portions 310a in which the first hole 312a is provided. Therefore, in comparison with a case where the two first wide-width portions 310a in which the first hole 312a is provided are provided without the two first wide-width portions 310a in which the first hole 312a is not provided being provided, it is possible to easily make the first resin body 310 consistent.

A second wide-width portion 310b is provided for the first resin body 310 on the connecting portion between the end portion, in the positive direction of the first direction X, of the first frame body 210 and the end portion, in the positive direction of the first direction X, of the first bar 222. The other second wide-width portion 310b is provided for the first resin body 310 on the connecting portion between the end portion, in the negative direction of the first direction X, of the first frame body 210 and the end portion, in the negative direction of the first direction X, of the second bar 224. Thereby, an amount of the resin in a portion of the first resin body 310 on the connecting portion between the first frame body 210 and the first torsion bar 220 is larger than an amount of the resin in a portion of the first resin body 310 on the surroundings of the connecting portion. In comparison with the surroundings of the connecting portion between the first frame body 210 and first torsion bar 220, the large stress is easily added to the first resin body 310 on the connecting portion of the first frame body 210. Therefore, according to the present embodiment, in comparison with a case where the second wide-width portion 310b is not provided for the first resin body 310 on the connecting portion between the first frame body 210 and the first torsion bar 220, it is possible to improve the strength of the first resin body 310.

A configuration that causes the amount of the resin in the portion of the first resin body 310 on the connecting portion between the first frame body 210 and the first torsion bar 220 to be larger than the amount of the resin in the portion of the first resin body 310 on the surroundings of the connecting portion is not limited to the present embodiment. For example, a thickness of the first resin body 310 in the third direction Z on the connecting portion between the first frame body 210 and the first torsion bar 220 may be thicker than a thickness of the first resin body 310 in the third direction Z in the surroundings of the connecting portion.

A third wide-width portion 310c is provided for the first resin body 310 on a connecting portion between an end portion, in the positive direction of the second direction Y, of the first frame body 210 and an end portion, in the negative direction of the second direction Y, of the third bar 242. The other third wide-width portion 310c is provided for the first resin body 310 on a connecting portion between an end portion, in the negative direction of the second direction Y, of the first frame body 210 and an end portion, in the positive direction of the first direction X, of the fourth bar 244. Thereby, an amount of the resin in a portion of the first resin body 310 on a connecting portion between the first frame body 210 and the second torsion bar 240 is larger than the amount of the resin in a portion of the first resin body 310 on the surroundings of the connecting portion. In comparison with the surroundings of the connecting portion between the first frame body 210 and the second torsion bar 240, the large stress is easily added to the first resin body 310 on the connecting portion of the first frame body 210. Therefore, according to the present embodiment, in comparison with a case where the third wide-width portion 310c is not provided for the first resin body 310 on the connecting portion between the first frame body 210 and the second torsion bar 240, it is possible to improve the strength of the first resin body 310.

A configuration that causes the amount of the resin in the portion of the first resin body 310 on the connecting portion between the first frame body 210 and the second torsion bar 240 to be larger than the amount of the resin in the portion of the first resin body 310 on the surroundings of the connecting portions is not limited to the present embodiment. For example, a thickness of the first resin body 310 in the third direction Z in the connecting portion between the first frame body 210 and the second torsion bar 240 may be thicker than the thickness of the first resin body 310 in the third direction Z in the surroundings of the connecting portion.

Then, with reference to FIG.1 and FIG.5, two fourth wide-width portions 320a will be explained.

A fourth wide-width portion 320a is provided on the negative direction side of the first direction X and the positive direction side of the second direction Y with respect to the center of the first direction X and the second direction Y of the second resin body 320. The other fourth wide-width portion 320a is provided on the positive direction side of the first direction X and the negative direction side of the second direction Y of the second resin body 320. A second hole 322a is provided on a surface, on the positive direction side of the third direction Z, of each of the fourth wide-width portions 320a. In the present embodiment, the fourth wide-width portion 320a is provided on the inside of an inner edge of the first torsion bar 220. The fourth wide-width portion 320a is provided as a gate from which a resin for forming the second resin body 320 is injected to a mold for molding the second resin body 320. Each of the second holes 322a remains as the inlet from which the resin is injected.

In the present embodiment, none of the second holes 322a is overlapped with the second frame body 230 when viewed in the third direction Z. Therefore, as is the case with the reason explained regarding the first hole 312a, in comparison with a case where the second hole 322a overlaps the second frame body 230 when viewed in the third direction Z, it is possible to suppress deformation of the second frame body 230 due to the pressure of the resin. A location at which the second hole 322a is provided is not limited to the location according to the present embodiment. For example, the second hole 322a may be overlapped with the second frame body 230 when viewed in the third direction Z.

In the present embodiment, the two second holes 322a are symmetrically arranged with respect to the center of the first direction X and the second direction Y of the second resin body 320.

Hereinafter, as necessary, the second hole 322a out of the two second holes 322a located on the positive direction side of the first direction X is referred to as one second hole 322a. As necessary, the second hole 322a out of the two second holes 322a located on the negative direction side of the first direction X is referred to as the other second hole 322a. As necessary, a portion of the second frame body 230 on the positive direction side of the first direction X with respect to the center of the first direction X of the second frame body 230 is referred to as one side-portion of the second frame body 230. As necessary, a portion of the second frame body 230 on the negative direction side of the first direction X with respect to the center of the first direction X of the second frame body 230 is referred to as the other side-portion of the second frame body 230. As necessary, a portion of the second frame body 230 connected to an end portion, in the positive direction of the second direction Y, of the third bar 242 is referred to as a connecting portion between the second frame body 230 and the third bar 242. As necessary, a portion of the second frame body 230 connected to an end portion, in the negative direction of the second direction Y, of the fourth bar 244 is referred to as a connecting portion between the second frame body 230 and the fourth bar 244.

The one second hole 322a is located to be shifted from the point on the one side-portion of the second frame body 230 which is equidistant in the circumferential direction of the second frame body 230 from the connecting portion between the second frame body 230 and the third bar 242 and the connecting portion between the second frame body 230 and the fourth bar 244. In the present embodiment, the point on the one side-portion of the second frame body 230 which is equidistant in the circumferential direction of the second frame body 230 from the connecting portion between the second frame body 230 and the third bar 242 and the connecting portion between the second frame body 230 and the fourth bar 244 is the center, in the second direction Y, of the one side-portion of the second frame body 230.

The other second hole 322a is located to be shifted from the point on the other side-portion of the second frame body 230 which is equidistant in the circumferential direction of the second frame body 230 from the connecting portion between the second frame body 230 and the third bar 242 and the connecting portion between the second frame body 230 and the fourth bar 244. In the present embodiment, the point on the other side-portion of the second frame body 230 which is equidistant in the circumferential direction of the second frame body 230 from the connecting portion between the second frame body 230 and the third bar 242 and the connecting portion between the second frame body 230 and the fourth bar 244 is the center of the second direction Y of the other side-portion of the second frame body 230.

In the present embodiment, in a case where the resin for forming the second resin body 320 is injected from the two second holes 322a, it is possible to cause a weld of the resin to be formed in a portion that is different from the connecting portion between the second frame body 230 and the third bar 242 and a portion that is different from the connecting portion between the second frame body 230 and the fourth bar 244. Therefore, in comparison with a case where the weld is formed in the connecting portion between the second frame body 230 and the third bar 242 and the connecting portion between the second frame body 230 and the fourth bar 244, it is possible to suppress a damage to the second resin body 320.

Next, the first light-emitting element 500 is explained.

The first light-emitting element 500 is installed on a side opposite to the side on which the reflecting surface 112 of the movable reflector 100 is located. Assuming that the first light-emitting element 500 is installed over the reflecting surface 112, a portion of the reflecting surface 112 over which the first light-emitting element 500 is installed cannot reflect light. In contrast, according to the present embodiment, it is possible to cause the reflecting surface 112 not to be covered with the first light-emitting element 500.

One of an anode and a cathode of the first light-emitting element 500 is electronically connected to at least a portion of the first bar 222 through the first supporting unit 252. The other of the anode and the cathode of the first light-emitting element 500 is electronically connected to at least a portion of the second bar 224 through the second supporting unit 254. A case will be considered where the anode of the first light-emitting element 500 is electronically connected to at least the one portion of the first bar 222 through the first supporting unit 252, and the cathode of the first light-emitting element 500 is electronically connected to at least the one portion of the second bar 224 through the second supporting unit 254. In this case, a current can flow from the first terminal 230d to the second terminal 230f via the third bar 242, a portion of the first frame body 210 located on the positive direction side of the first direction X and the positive direction side of the second direction Y with respect to the center of the first direction X and the second direction Y of the first frame body 210, the first bar 222, the first supporting unit 252, the first light-emitting element 500, the second supporting unit 254, the second bar 224, a portion of the first frame body 210 located on the negative direction side of the first direction X and the negative direction side of the second direction Y with respect to the center of the first direction X and the second direction Y of the first frame body 210, and the fourth bar 244.

Next, the first light detection element 600 will be explained.

The first light detection element 600 is located on the negative direction side of the third direction Z with respect to the first light-emitting element 500. The first light detection element 600 includes a first light detection unit 612, a second light detection unit 614, a third light detection unit 616, and a fourth light detection unit 618.

As shown in FIG.3, the first light detection unit 612 and the second light detection unit 614 are located on the positive direction side of the second direction Y with respect to a first virtual plane IP1. The third light detection unit 616 and the fourth light detection unit 618 are located on the negative direction side of the second direction Y with respect to the first virtual plane IP1. The first virtual plane IP1 passes through the rotation axis of the movable reflector 100 and is perpendicular to the reflecting surface 112.

As shown in FIG.4, the second light detection unit 614 and the third light detection unit 616 are located on the negative direction side of the first direction X with respect to a second virtual plane IP2. The first light detection unit 612 and the fourth light detection unit 618 are located on the positive direction side of the first direction X with respect to the second virtual plane IP2. The second virtual plane IP2 passes through the rotation axis of the first frame body 210 and is perpendicular to the reflecting surface 112.

In a case where a normal line of the reflecting surface 112 is in parallel to the positive direction of the third direction Z, the center of a spot generated in the first light detection element 600 by light emitted from the first light-emitting element 500 corresponds to an intersecting portion of the first virtual plane IP1 and the second virtual plane IP2 on the first light detection element 600. In addition, in a case where the normal line of the reflecting surface 112 is in parallel to the positive direction of the third direction Z, an emission area of the first light detection unit 612 out of the spot, an emission area of the second light detection unit 614 out of the spot, an emission area of the third light detection unit 616 out of the spot, and an emission area of the fourth light detection unit 618 out of the spot are equal to each other. Intensity of a signal generated in each of the detection units by the spot becomes higher as the emission area of each of the light detection units out of the spot becomes larger.

In the present embodiment, oscillation of the movable reflector 100 can be detected according to the ratio of the intensity of the signal that is generated in each of the first light detection unit 612, the second light detection unit 614, the third light detection unit 616, and the fourth light detection unit 618 by the light emitted from the first light-emitting element 500. Specifically, a swinging angle of the movable reflector 100 in the surroundings of the second torsion bars 240 in a case where the first frame body 210 oscillates with respect to the second frame body 230 with the second torsion bars 240 as the rotation axis is estimated by X_TiltError indicated by a formula (1) below. Further, a swinging angle of the movable reflector 100 in the surroundings of the first frame body 210 in a case where the movable reflector 100 oscillates with respect to the first frame body 210 with the first torsion bars 220 as the rotation axis is estimated by Y_TiltError indicated by a formula (2) below.

$$X_TiltError = (A + D - B - C)/(A + B + C + D) \quad (1)$$

$$Y_TiltError = (A + B - C - D)/(A + B + C + D) \quad (2)$$

Provided that A, B, C, and D are the intensity of the signal generated in the first light detection unit 612, the second light detection unit 614, the third light detection unit 616, and the fourth light detection unit 618 by the light emitted from the first light-emitting element 500, respectively.

In the formula (1) described above, a sum of the intensity of the signal generated in the first light detection unit 612 and the intensity of the signal generated in the fourth light detection unit 618 and a sum of the intensity of the signal generated in the second light detection unit 614 and the intensity of the signal generated in the third light detection unit 616 are compared. By this comparison, the swinging angle of the movable reflector 100 in the surroundings of the second torsion bars 240 in a case where the first frame body 210 oscillates with respect to the second frame body 230 with the second torsion bars 240 as the rotation axis can be estimated.

In the formula (2) described above, a sum of the intensity of the signal generated in the first light detection unit 612 and the intensity of the signal generated in the second light detection unit 614 and a sum of the intensity of the signal generated in the third light detection unit 616 and the intensity of the signal generated in the fourth light detection unit 618 are compared. By this comparison, the swinging angle of the movable reflector 100 in the surroundings of the first torsion bars 220 in a case where the movable reflector 100 oscillates with respect to the first frame body 210 with the first torsion bar 220 as the rotation axis can be estimated.

A detection method of the oscillation of the movable reflector 100 is not limited to the method according to the present embodiment.

For example, the first light detection element 600 may include a single light detection unit. In this example, the single light detection unit is provided on, for example, the positive direction side of the first direction X with respect to the first virtual plane IP1. In this case, when the single light detection unit detects the light emitted from the first light-emitting element 500, it can be said that the normal line of the reflecting surface 112 is inclined toward the negative direction side of the second direction Y with respect to the positive direction of the third direction Z. On the other hand, when the single light detection unit does not detect the light emitted from the first light-emitting element 500, it can be said that the normal line of the reflecting surface 112 is inclined toward the positive direction side of the second direction Y with respect to the positive direction of the third direction Z.

In addition, the first light-emitting element 500 may be installed over the reflecting surface 112. In this case, the first light detection element 600 is provided on the positive direction side of the third direction Z of the reflecting surface 112. In this example also, the oscillation of the movable reflector 100 can be detected by using the first light-emitting element 500 and the first light detection element 600.

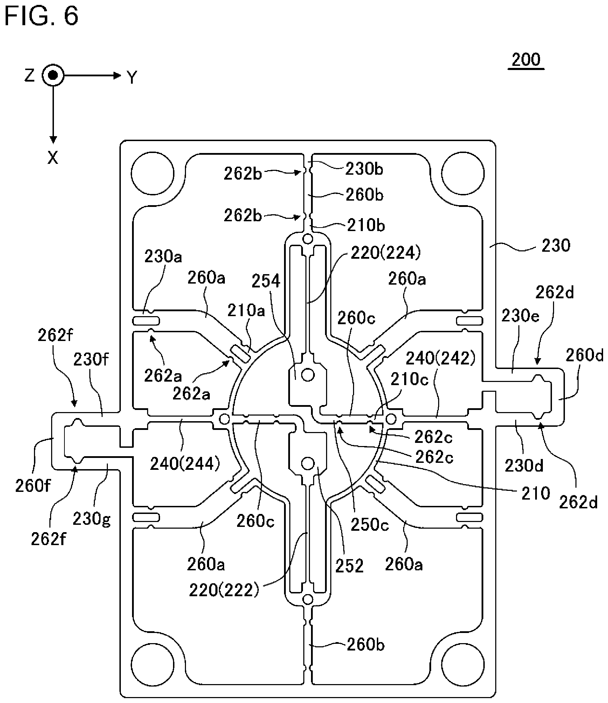

FIGs.6 and 7 are drawings explaining an example of a method for manufacturing the optical scanning device 10 according to the embodiment. In this example, the optical scanning device 10 according to the embodiment is manufactured as follows.

First, a metal body 200 indicated in FIG.6 is prepared. The metal body 200 includes four first connecting portions 260a, two second connecting portions 260b, two third connecting portions 260c, a first turning back portion 260d, and a second turning back portion 260f.

The four first connecting portions 260a are connected to the outer edge, facing in a direction perpendicular to the third direction Z, of the first frame body 210 and the inner edge, facing in a direction perpendicular to the third direction Z, of the second frame body 230. Thereby, the first frame body 210 is supported by the second frame body 230 not only with the second torsion bar 240 but also with the four first connecting portions 260a. Specifically, one end of each of the first connecting portions 260a connected to the outer edge of the first frame body 210 is connected to the tip of the first protrusion 210a. The other end of each of the first connecting portions 260a connected to the inner edge of the second frame body 230 is connected to the tip of the second protrusion 230a. Each of the first connecting portions 260a includes two first narrow-width portions 262a. One of the two first narrow-width portions 262a is provided on the one end of a first connecting portion 260a connected to the tip of the first protrusion 210a. The other of the two first narrow-width portions 262a is provided on the other end of the first connecting portion 260a connected to the tip of the second protrusion 230a.

The two second connecting portions 260b are connected to the outer edge, facing in the direction perpendicular to the third direction Z, of the first frame body 210 and the inner edge, facing in the direction perpendicular to the third direction Z, of the second frame body 230. Thereby, the first frame body 210 is supported by the second frame body 230 not only with the second torsion bar 240 but also with the two second connecting portions 260b. Specifically, one end of each of the second connecting portions 260b connected to the outer edge of the first frame body 210 is connected to a tip of the third protrusion 210b. The other end of each of the second connecting portions 260b connected to the inner edge of the second frame body 230 is connected to a tip of the fourth protrusion 230b. Each of the second connecting portions 260b includes two second narrow-width portions 262b. One of the two second narrow-width portions 262b is provided on the one end of the second connecting portion 260b connected to the tip of the third protrusion 210b. The other of the two second narrow-width portions 262b is provided on the other end of the second connecting portion 260b connected to the tip of the fourth protrusion 230b.

One of the two third connecting portions 260c is connected to an outer edge of an end portion, on the negative direction side of the first direction X, of the first supporting unit 252 and an inner edge of a portion, on the negative direction side of the second direction Y, of the first frame body 210. The other of the two third connecting portions 260c is connected to an outer edge of an end portion, in the positive direction of the first direction X, of the second supporting unit 254 and an inner edge of a portion, on the positive direction side of the second direction Y, of the first frame body 210. Thereby, the first supporting unit 252 and the second supporting unit 254 are supported by the first frame body 210 not only with the first torsion bar 220 but also with the two third connecting portions 260c. Specifically, one end of each of the third connecting portions 260c connected to the first supporting unit 252 or the second supporting unit 254 is connected to a tip of the fifth protrusion 250c. The other end of each of the third connecting portions 260c connected to the inner edge of the first frame body 210 is connected to a tip of the sixth protrusion 210c. Each of the third connecting portions 260c includes two third narrow-width portions 262c. One of the two third narrow-width portions 262c is provided at the one end of the third connecting portion 260c connected to the tip of the fifth protrusion 250c. The other of the two third narrow-width portions 262c is provided at the other end of the third connecting portion 260c connected to the tip of the sixth protrusion 210c.

The first turning back portion 260d turns back between the first terminal 230d and the seventh protrusion 230e on the outside of the outer edge, in the positive direction of the second direction Y, of the second frame body 230. The first turning back portion 260d includes two fourth narrow-width portions 262d. One of the two fourth narrow-width portions 262d is provided at one end of the first turning back portion 260d connected to a tip of the first terminal 230d. The other of the two fourth narrow-width portions 262d is provided at the other end of the first turning back portion 260d connected to a tip of the seventh protrusion 230e.

The second turning back portion 260f turns back between the second terminal 230f and the eighth protrusion 230g on the outside of the outer edge, in the negative direction of the second direction Y, of the second frame body 230. The second turning back portion 260f includes two fifth narrow-width portions 262f. One of the two fifth narrow-width portions 262f is provided at one end of the second turning back portion 260f connected to a tip of the second terminal 230f. The other of the two fifth narrow-width portions 262f is provided at the other end of the second turning back portion 260f connected to a tip of the eighth protrusion 230g.

Then, as shown in FIG.7, the first resin body 310 is formed on the first frame body 210. Specifically, a mold for molding the first resin body 310 is mounted on the first frame body 210, and the resin for forming the first resin body 310 is injected to the mold from the positive direction side of the third direction Z with respect to the first frame body 210. The resin is injected from two locations at which the first wide-width portion 310a located on the positive direction side of the first direction X and the positive direction side of the second direction Y with respect to the center of the first direction X and the second direction Y of the first resin body 310 and the first wide-width portion 310a located on the negative direction side of the first direction X and the negative direction side of the second direction Y with respect to the center of the first direction X and the second direction Y of the first resin body 310 are formed. The resin is injected from the two locations, thereby the first hole 312a is formed on a surface, on the positive direction side of the third direction Z, of each of the first wide-width portions 310a.

Further, the second resin body 320 is formed on the second frame body 230. Specifically, a mold for molding the second resin body 320 is mounted on the second frame body 230, and the resin for forming the second resin body 320 is injected to the mold from the positive direction side of the third direction Z with respect to the second frame body 230. The resin is injected from two locations at which the two fourth wide-width portions 320a are formed. The resin is injected from the two locations, thereby the second hole 322a is formed on a surface, on the positive direction side of the third direction Z, of each of the fourth wide-width portions 320a.

In addition, the resin stage 350 is formed on the first supporting unit 252 and the second supporting unit 254. Specifically, the first supporting unit 252 and the second supporting unit 254 are placed in a mold for molding the resin stage 350, and the resin for forming the resin stage 350 is injected to the mold. The resin is injected from a location that overlaps the first supporting unit 252 when viewed in the third direction Z. The resin is injected from the location, thereby a third hole 352a is formed on the surface, on the positive direction side of the third direction Z, of the resin stage 350.

Next, each of the first connecting portions 260a is removed by a method such as laser fusing. Specifically, the two first narrow-width portions 262a are cut by a method such as laser fusing. Thereby, the tips of the first protrusions 210a remain on the outside of the outer edge, facing in the direction perpendicular to the third direction Z, of the first resin body 310, and the tips of second protrusions 230a remain on the outside of the inner edge, facing in the direction perpendicular to the third direction Z, of the second resin body 320. According to this method, in comparison with a case where the first connecting portions 260a are removed by the method such as the laser fusing such that the tips of the first protrusions 210a do not remain on the outside of the outer edge, facing in a direction perpendicular to the third direction Z, of the first resin body 310, it is possible to suppress a damage to the outer edge, facing in a direction perpendicular to the third direction Z, of the first resin body 310. As is the case with the above, in comparison with a case where the first connecting portions 260a are removed by the method such as the laser fusing such that the tips of the third protrusions 210b do not remain on the outside of the outer edge, facing in a direction perpendicular to the third direction Z, of the second resin body 320, it is possible to suppress a damage to the inner edge, facing in the direction perpendicular to the third direction Z, of the second resin body 320 due to heat generated by the method such as the laser fusing.

As is the case with the first connecting portion 260a, each of the second connecting portions 260b is removed by cutting the two second narrow-width portions 262b of each of the second connecting portions 260b by a method such as a laser fusing. Further, each of the third connecting portions 260c is removed by cutting the two third narrow-width portions 262c of each of the third connecting portions 260c by a method such as the laser fusing. In addition, the first turning back portion 260d is removed by cutting the two fourth narrow-width portions 262d by a method such as the laser fusing. Further the second turning back portion 260f is removed by cutting the two fifth narrow-width portions 262f by a method such as the laser fusing.

Next, the reflector 110 is placed on the positive direction side of the third direction Z of the three supporting protrusions 352 of the resin stage 350. In addition, the first magnet 410 and the first light-emitting element 500 are provided on the negative direction side of the third direction Z of the resin stage 350. Further, the two second magnets 420 are provided on the negative direction side of the third direction Z of the first resin body 310. In addition, the first light detection element 600 is provided on the negative direction side of the third direction Z of the first light-emitting element 500.

In the above manner, the optical scanning device 10 is manufactured.

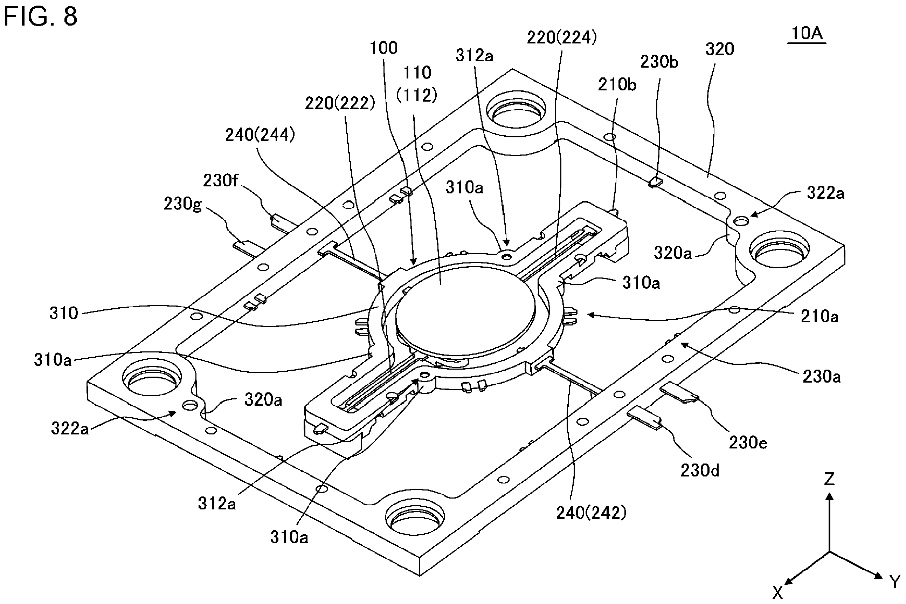

FIG.8 is a perspective view of an optical scanning device 10A according to a modification example. The optical scanning device 10A according to the present modification example does not include the first light-emitting element 500 and the first light detection element 600 indicated in FIG.1 and FIG.2.

EXAMPLE

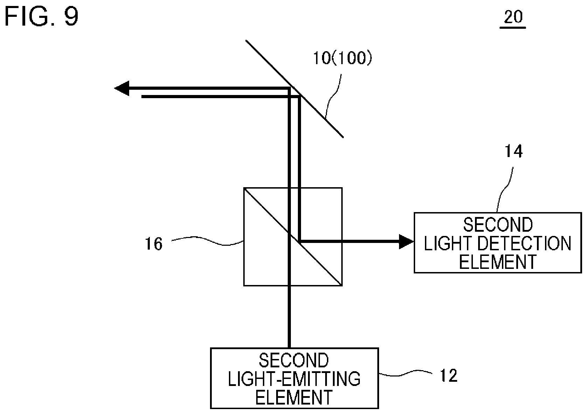

FIG.9 is a diagram of a configuration of a sensor device 20 according to an example.

The sensor device 20 includes an optical scanning device 10 according to the embodiment. The sensor device 20 further includes a second light-emitting element 12, a second light detection element 14, and a beam splitter 16. In the present example, the sensor device 20 is a Light Detection And Ranging (LiDAR).

The second light-emitting element 12 is, for example, a laser diode (LD). As indicated by a solid line arrow that extends from the second light-emitting element 12 via the beam splitter 16 and a movable reflector 100, light emitted from the second light-emitting element 12 passes through the beam splitter 16 and is reflected by the movable reflector 100. The light reflected by the movable reflector 100 is reflected or scattered by a not-shown object that exists in the outside of the optical scanning device 10.

The second light detection element 14 is, for example, an avalanche photo diode (APD). As indicated by a solid line arrow that extends to the second light detection element 14 via the optical scanning device 10 and the beam splitter 16, the second light detection element 14 detects light emitted from the second light-emitting element 12, reflected by the movable reflector 100, and reflected or scattered by the not-shown object that exists in the outside of the optical scanning device 10. In the present example, the light detected by the second light detection element 14 is reflected or scattered by the above-mentioned object, reflected by the movable reflector 100 and the beam splitter 16, and reaches the second light detection element 14.

A configuration of the sensor device 20 is not limited to the configuration according to the present example. For example, in the present example, an optical axis of light that is reflected by the movable reflector 100 and irradiated to an object that exists in the outside of the optical scanning device 10 and an optical axis of light reflected or scattered by the object match. However, the optical axis of the light that is reflected by the movable reflector 100 and irradiated to the object that exists in the outside of the optical scanning device 10 and the optical axis of the light reflected or scattered by the object may be shifted from each other. In this case, the light reflected or scattered by the object reaches the second light detection element 14 without being reflected on the movable reflector 100.

Hitherto, the embodiment and example of the present invention are described with reference to the drawings.

However, these are just examples of the present invention, and various configurations other than the above may be employed.

REFERENCE SIGNS LIST

10 optical scanning device
10A optical scanning device
12 second light-emitting element
14 second light detection element
16 beam splitter
20 sensor device
100 movable reflector
110 reflector
112 reflecting surface
200 metal body
210 first frame body
210a first protrusion
210b third protrusion
210c sixth protrusion
212 first dividing portion
220 first torsion bar
222 first bar
224 second bar
230 second frame body
230a second protrusion
230b fourth protrusion
230d first terminal
230e seventh protrusion
230f second terminal
232 second dividing portion
240 second torsion bar
242 third bar
244 fourth bar
250c fifth protrusion
252 first supporting unit
254 second supporting unit
260a first connecting portion
260b second connecting portion
260c third connecting portion
260d first turning back portion
260f second turning back portion
262a first narrow-width portion
262b second narrow-width portion
262c third narrow-width portion
262d fourth narrow-width portion
262f fifth narrow-width portion
310 first resin body
310a first wide-width portion
310b second wide-width portion
310c third wide-width portion
312a first hole
320 second resin body
320a fourth wide-width portion
322a second hole
350 resin stage
352 supporting protrusion

352a third hole
410 first magnet
420 second magnet
500 first light-emitting element
600 first light detection element
612 first light detection unit
614 second light detection unit
616 third light detection unit
618 fourth light detection unit
IP1 first virtual plane
IP2 second virtual plane
X first direction
Y second direction
Z third direction

## Claims

1. An optical scanning device comprising:

   a movable reflector;
   a first frame body made of metal that is located in at least a part of a region surrounding the movable reflector;
   a first torsion bar made of metal that is connected to the movable reflector and the first frame body; and
   a first resin body provided over at least a part of the first frame body.

2. The optical scanning device according to Claim 1 further comprising:

   a second frame body made of metal that is located in at least a part of a region surrounding the first frame body;
   a second torsion bar made of metal that is connected to the first frame body and the second frame body; and
   a second resin body provided over at least a part of the second frame body.

3. The optical scanning device according to Claim 1 or 2,
   wherein a distance between both portions of the first frame body opposing to each other in a direction parallel to a rotation axis of the first frame body decreases in at least a part of the first frame body as going away from the rotation axis.

4. The optical scanning device according to any one of Claims 1 to 3, further comprising:
   a protrusion which is provided at at least one of an outer edge or an inner edge of the first frame body and a tip of which is exposed from the first resin body.

5. The optical scanning device according to any one of Claims 1 to 4,
   wherein a weld of a resin forming the first resin body is formed in a portion that is different from a portion of the first frame body that is connected to the first torsion bar.

6. The optical scanning device according to any one of Claims 1 to 5,
   wherein an amount of a resin in a portion of the first resin body in which curvature of the first frame body changes is larger than an amount of a resin in surroundings of the portion of the first frame body out of the first resin body.

7. The optical scanning device according to any one of Claims 1 to 6,
   wherein an amount of a resin in a connecting portion of the first resin body between the first frame body and the first torsion bar is larger than an amount of a resin in surroundings of the connecting portion of the first resin body.

8. The optical scanning device according to any one of Claims 1 to 7,
   wherein at least one hole is provided on a surface of a portion of the first resin body that is not overlapped with the first frame body.

9. The optical scanning device according to any one of Claims 1 to 8, further comprising a permanent magnet mounted over the first frame body,

wherein a width, in a direction parallel to the rotation axis of the first frame body, of the permanent magnet is equal to or larger than 95% and equal to or less than 1050 of a width, in the direction parallel to the rotation axis of the first frame body, of a portion of the first frame body at which the permanent magnet is mounted.

**10.** A sensor device comprising:

the optical scanning device according to any one of Claims 1 to 9,
a light-emitting element; and
a light detection element that detects light emitted from the light-emitting element, reflected by the movable reflector, and reflected or scattered by an object that exists outside of the optical scanning device.

FIG. 1
10
322a
320
320a
230b
210b
310a
210a
230a
230e
230d
220(224)
240(242)
312a
310a
614
612
110
(112)
100
616
220(222)
600
618
240(244)
310a
320a
312a
230f
230g
310
310a
322a
Y
Z
X

FIG. 2
10
Y
Z
X
220(224)
420
230e
230d
240(242)
410
110
320
600
350
500
310
240(244)
220(222)
230f
230g
420

10
A
230
612,614
100(112)
500
IP1
220
616,618
600
A
Z
Y
X

FIG. 3

10
230
420
614,616
410
100(112)
500
IP2
240
612,618
600
420
Z
Y
X

FIG. 4

FIG. 5

A－A(10)
310b
230b
210
210b
320
320a
230
220(222)
210a
310a
310a
210a
100
230a
212
230a
230g
252
240(242)
250c
210c
230d
232
310c
310c
232
230f
210c
250c
230e
240(244)
254
350
212
110
230a
230a
310a
310a
210a
210a
310
220(224)
210
210b
320a
310b
230b
X
Z
Y

FIG. 6

200
Z
Y
X
262b
230b
260b
262b
210b
230a
220(224)
230
260a
254
260a
210a
262d
260c
230e
262f
260d
230f
240(242)
262a
210c
262a
262c
262c
240(244)
230d
260f
210
262d
262f
230g
260c
250c
260a
252
260a
220(222)
260b

FIG. 7

200
Z
Y
X
322a
262b
230b
260b
262b
210b
320a
320
220(224)
230a
260a
312a
310a
260c
262d
210a
250c
230e
262f
240(242)
260d
230f
262a
210c
262a
352
352
262c
262c
240(244)
230d
260f
350
310
262d
230g
352a
262f
310a
352
312a
220(222)
320a
322a

10A
Z
Y
X
322a
320
320a
230b
210b
310a
210a
230a
230e
230d
220(224)
312a
310a
110
(112)
100
220(222)
240(242)
240(244)
310a
312a
230f
230g
320a
310
310a
322a


FIG. 8

FIG. 9

20
10(100)
14
SECOND
LIGHT DETECTION
ELEMENT
16
SECOND
LIGHT-EMITTING
ELEMENT
12

## INTERNATIONAL SEARCH REPORT

International application No. **PCT/JP2021/036138**

**A. CLASSIFICATION OF SUBJECT MATTER**

***G02B 26/10***(2006.01)i
FI: G02B26/10

According to International Patent Classification (IPC) or to both national classification and IPC

**B. FIELDS SEARCHED**

Minimum documentation searched (classification system followed by classification symbols)

G02B26/10

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-45335 A (PANASONIC IP MANAGEMENT CORP.) 04 April 2016 (2016-04-04) paragraphs [0013]-[0070], [0090]-[0113], fig. 11, 12 | 1-4, 10 |
| A | entire text, all drawings | 5-9 |
| Y | WO 2014/097683 A1 (MITSUBISHI ELECTRIC CORP.) 26 June 2014 (2014-06-26) paragraphs [0016]-[0050], fig. 1, 2 | 1-4, 10 |
| A | entire text, all drawings | 5-9 |
| Y | JP 2004-205836 A (OLYMPUS CORP.) 22 July 2004 (2004-07-22) paragraphs [0031]-[0038], fig. 9-11 | 1-4, 10 |
| A | entire text, all drawings | 5-9 |
| Y | JP 2017-134384 A (PANASONIC IP MANAGEMENT CORP.) 03 August 2017 (2017-08-03) paragraphs [0048]-[0056], [0172], fig. 7(a), 7(b) | 1-4, 10 |
| A | entire text, all drawings | 5-9 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 December 2021** | **21 December 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/036138**

**C. DOCUMENTS CONSIDERED TO BE RELEVANT**

| Category* | Citation of document, with indication, where appropriate, of the relevant passages | Relevant to claim No. |
|---|---|---|
| Y | JP 2012-145910 A (MITSUMI ELECTRIC CO., LTD.) 02 August 2012 (2012-08-02) paragraphs [0037]-[0041], fig. 2 | 2-4, 10 |
| A | entire text, all drawings | 5-9 |
| Y | JP 2011-133745 A (TOYOTA CENTRAL R&D LABS., INC.) 07 July 2011 (2011-07-07) paragraphs [0014]-[0017], fig. 1-3 | 3, 4, 10 |
| A | paragraphs [0014]-[0017], fig. 1-3 | 5-8 |
| A | paragraphs [0014]-[0032], fig. 1-7 | 9 |
| Y | JP 2010-266508 A (KONICA MINOLTA OPTO, INC.) 25 November 2010 (2010-11-25) paragraphs [0041]-[0049], fig. 4 | 3, 4, 10 |
| A | paragraphs [0041]-[0049], fig. 4 | 5-9 |
| A | JP 2020-187235 A (CANON INC.) 19 November 2020 (2020-11-19) paragraphs [0020]-[0025], fig. 4, 5 | 5-10 |
| A | WO 2019/208375 A1 (PIONEER CORP.) 31 October 2019 (2019-10-31) paragraphs [0017]-[0039], fig. 1, 2 | 9, 10 |

Form PCT/ISA/210 (second sheet) (January 2015)

**INTERNATIONAL SEARCH REPORT**
**Information on patent family members**

International application No.
**PCT/JP2021/036138**

| Patent document cited in search report | Publication date (day/month/year) | Patent family member(s) | Publication date (day/month/year) |
|---|---|---|---|
| JP 2016-45335 A | 04 April 2016 | (Family: none) | |
| WO 2014/097683 A1 | 26 June 2014 | US 2015/0293349 A1 paragraphs [0025]-[0059], fig. 1, 2<br>CN 104884993 A | |
| JP 2004-205836 A | 22 July 2004 | US 2004/0130812 A1 paragraphs [0111]-[0119], fig. 9-11 | |
| JP 2017-134384 A | 03 August 2017 | US 2017/0212347 A1 paragraphs [0086]-[0094], [0210], fig. 7A, 7B | |
| JP 2012-145910 A | 02 August 2012 | US 2012/0160557 A1 paragraphs [0120]-[0125], fig. 2<br>CN 102556940 A | |
| JP 2011-133745 A | 07 July 2011 | (Family: none) | |
| JP 2010-266508 A | 25 November 2010 | (Family: none) | |
| JP 2020-187235 A | 19 November 2020 | (Family: none) | |
| WO 2019/208375 A1 | 31 October 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010002777 A